# FASCICULE DE BREVET EUROPEEN

(11) **EP 4 444 218 B1**
(45) Date de publication et mention de la délivrance du brevet: **08.04.2026**
(21) Numéro de dépôt: 22789976.2
(22) Date de dépôt: 27.09.2022
(51) Int. Cl.: A61C 1/00, A61C 1/12, A61C 1/08, A61C 5/40, A61C 19/04, A61C 9/00, A61C 1/18

(54) **PIÈCE À MAIN POUR ALERTER D'UN RISQUE DE BRIS D'UN INSTRUMENT**
HANDSTÜCK ZUR WARNUNG VOR EINEM INSTRUMENTENBRUCHRISIKO
HANDPIECE FOR WARNING OF AN INSTRUMENT BREAK RISK

(30) Priorité: 09.12.2021 FR 2113220
(43) Date de publication de la demande: 16.10.2024
(73) Titulaire: Nehme, Walid, Beirut, 0000 (LB); Micro-Mega International, 25000 Besancon (FR)
(72) Inventeur: CLAUDE, Stéphane, 1634 LA ROCHE (CH); NEHME, Walid, BEIRUT, 0000 (LB)
(74) Mandataire: Icosa
(86) Numéro de dépôt international: PCT/FR2022/051826
(87) Numéro de publication internationale: WO 2023/105124

(56) Documents cités:
- WO-A1-2016/174572
- WO-A2-2013/034462
- FR-A1- 2 876 898
- US-A1- 2019 254 774
- US-A1- 2019 380 813

## Description

### Domaine technique

L'invention se rapporte au domaine technique de l'endodontie.

### Art antérieur

Le traitement endodontique d'un canal radiculaire consiste à évacuer les tissus de ce canal. Pour effectuer cette opération, le praticien utilise des instruments canalaires, tels que des limes d'exploration, afin de repérer la trajectoire du canal, déterminer précisément la longueur du canal, puis évacuer les tissus au moyen d'une autre lime avant de mettre en forme le canal en vue de son obturation.

Lors d'un traitement endodontique, le bris instrumental est l'une des complications les plus fréquentes. Les complications directes de cette rupture instrumentale sont d'ordre clinique :
- s'il est possible de récupérer le bris d'instrument, les conséquences sont une augmentation de la durée du traitement et une potentielle fragilisation de la dent par une réduction de l'épaisseur de paroi résiduelle nécessaire au retrait du bris ;
- s'il n'est pas possible de récupérer le bris d'instrument, les conséquences peuvent (i) être liées à une désinfection insuffisante du réseau canalaire entrainant douleur post-opératoire, une non cicatrisation et donc un échec du traitement endodontique ou (ii) être liées à l'apparition d'un processus infectieux non existant au moment du traitement et aboutissant à des douleurs et échecs du traitement à plus ou moins moyen terme.

Les occurrences de bris instrumentaux sont généralement réduites par la conception des instruments canalaires, afin de les rendre plus résistants aux contraintes exercées lors du traitement endodontique.

Toutefois, un bris instrumental est un événement rapide, qui peut survenir en moins de quelques secondes, et il est difficile de connaître les conditions dans lesquelles le bris est survenu.

Plusieurs paramètres peuvent influer sur l'occurrence d'un bris, tels que :
- la géométrie du canal traité, en particulier s'il présente une géométrie complexe, avec un changement brusque de direction formant un coude ;
- l'irrigation du canal, mise en œuvre ou non par le praticien lors de certaines phases du traitement ;
- l'effort que le praticien exerce sur l'instrument.

Les possibilités d'amélioration de la conception des instruments sont donc limitées par la méconnaissance de ces multiples paramètres.

Il est également difficile, même pour un praticien expérimenté, de savoir précisément comment évolue un instrument au sein du canal en cours de traitement. Même si le praticien sait que le canal qu'il va traiter est complexe, et qu'il estime prendre les précautions nécessaires, il peut se tromper et ne pas adapter correctement son geste ou la dynamique d'entrainement de l'instrument à la complexité du canal, ce qui peut mener à un bris instrumental.

US2019254774A1 définit un appareil de support de traitement de canal radiculaire, un support sur lequel est enregistré un programme, un appareil de traitement de canal radiculaire et un système de support de traitement de canal radiculaire.

### Exposé de l'invention

Le but de l'invention est de pallier les inconvénients de l'art antérieur, en proposant un procédé d'assistance d'un praticien lors du traitement de canaux radiculaires.

À cet effet, il a été mis au point une pièce à main pour alerter d'un risque de bris d'un instrument.

L'invention est telle que définie dans les revendications annexées.

La demande décrit également un procédé permettant d'alerter d'un risque de rupture d'instrument.

De cette manière, il est possible de savoir en temps réel où se trouve l'instrument au sein du canal lors du traitement, et par conséquent de déterminer si l'instrument va aborder une zone à risque du canal prédéterminée avant la réalisation du traitement, par exemple par le praticien, en fonction de la géométrie du canal.

De manière que le praticien soit alerté lorsque l'instrument va aborder une zone à risque du canal, le procédé comprend une étape d'information de la position à destination du praticien.

Dans un but de simplicité de la remontée d'information à destination du praticien, l'alerte est visuelle, haptique ou sonore.

Avantageusement, le procédé comprend une étape de comparaison de la géométrie du canal radiculaire à traiter avec une base de données comprenant des enregistrements de traitements antérieurs de canaux radiculaires, les enregistrements comprenant :
- les géométries des canaux traités ;
- les contraintes locales au sein d'un matériau constituant les instruments utilisés, obtenues par calcul par éléments finis basé sur la géométrie du canal, une géométrie de l'instrument, une profondeur de travail de l'instrument à un instant donné, ou intervalle donné, et une contrainte subie par l'instrument à ce même instant donné, ou intervalle donné ;
l'étape de comparaison avec les enregistrements des traitements antérieurs permettant d'identifier des zones à risque du canal à traiter, où des contraintes locales seront élevées au sein de l'instrument.

Un tel procédé permet d'assister encore plus le praticien, en identifiant automatiquement les zones à risques sur la base de traitements antérieurs déjà effectués, ce qui garantit la pertinence de l'identification desdites zones, et simplifie l'utilisation du procédé.

La base de données étant évolutive, le procédé peut également adapter ses critères de détermination des zones à risques aux évolutions de la base de données ou encore aux évolutions de la conception des instruments et/ou des conditions d'utilisation prévues.

Avantageusement, le procédé comprend une étape d'adaptation de la dynamique instrumentale lorsque l'instrument atteint la zone à risque. De cette manière, l'assistance du praticien est complète, et le procédé joue un rôle actif dans la prévention du bris instrumental.

Également définie est aussi une pièce à main pour la pratique endodontique, comprenant une unité de contrôle exécutant un programme d'ordinateur, et conçue pour entraîner un instrument canalaire.

La pièce à main comprend des moyens de détection de la distance entre un point de référence et une partie d'une dent, ainsi que des moyens de mesure de contraintes mécaniques subies par l'instrument, connectés à l'unité de contrôle. Le programme d'ordinateur est programmé pour déterminer une profondeur à laquelle se trouve l'instrument en cours de travail en fonction d'une longueur connue de l'instrument, et le programme d'ordinateur est configuré pour détecter des zones à risques du canal à traiter par comparaison de sa géométrie avec des enregistrements de traitements antérieurs, les enregistrements comprenant :
- les géométries des canaux traités ;
- les contraintes locales au sein d'un matériau constituant les instruments utilisés, obtenues par calcul par éléments finis basé sur la géométrie du canal, une géométrie de l'instrument, une profondeur de travail de l'instrument à un instant donné, ou intervalle donné, et une contrainte subie par l'instrument à ce même instant donné, ou intervalle donné.

Le programme d'ordinateur est configuré pour alerter le praticien lorsque l'instrument se trouve dans une zone à risque.

La pièce à main ainsi conçue comprend tous les éléments structurels nécessaires pour mettre en œuvre le procédé selon les caractéristiques précitées, avec les avantages en découlant.

### Brève description des dessins

[Fig.1] est un schéma d'une dent, illustrant la géométrie d'un canal à traiter.
[Fig.2] est un schéma d'un instrument canalaire.
[Fig.3] est une illustration d'une pièce à main selon l'invention.
[Fig.4] est un schéma illustrant une telle pièce à main en cours d'utilisation.
[Fig.5] est un schéma d'un traitement dans une première configuration.
[Fig.6] est un schéma d'un calcul par élément finis dans cette première configuration.
[Fig.7] est un schéma du traitement dans une seconde configuration.
[Fig.8] est un schéma d'un calcul par élément finis dans cette seconde configuration.
[Fig.9] est un schéma illustrant une base de données catégorisant différentes géométries de canaux radiculaires.

### Description détaillée de l'invention

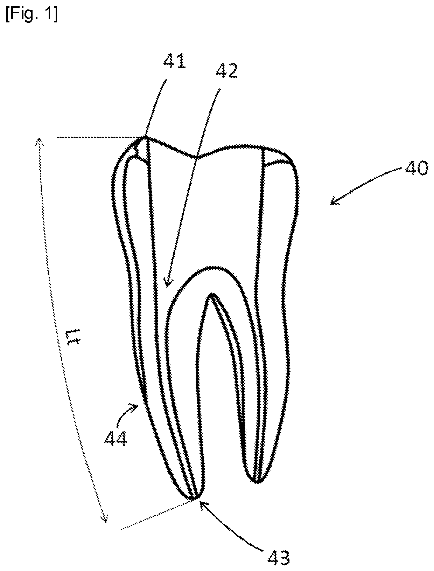

En référence à la figure 1, un traitement endodontique consiste à ôter les tissus d'un canal radiculaire (42) d'une dent (40). Lors de ce traitement, il conviendra d'utiliser un instrument (20), tel qu'une lime, jusqu'à l'apex (43) du canal (42). La longueur entre une partie (41) de la dent (40), généralement une cuspide, et l'apex (43) est la longueur de travail (Lt).

Le canal (42) étant approximativement filiforme, les longueurs sont mesurées selon le développé du canal (42). Toutefois, le canal (42) peut présenter différents types de géométries, ce qui a une influence sur la complexité du traitement à effectuer.

Un canal (42) peut être rectiligne, auquel cas le traitement sera simple. A l'inverse, un canal (42) présentant une courbure (44) va imprimer une contrainte sur l'instrument (20). Dans le cas extrême où cette courbure (44) prend la forme d'un coude, le niveau de contrainte est tel qu'il peut mener au bris de l'instrument (20).

Il est donc commun d'obtenir une acquisition de la géométrie du canal (42) à traiter, par exemple par radiographie, afin que le praticien puisse anticiper au mieux son geste, et puisse prévoir quelles seront les zones à risque où l'instrument (20) risque de se briser.

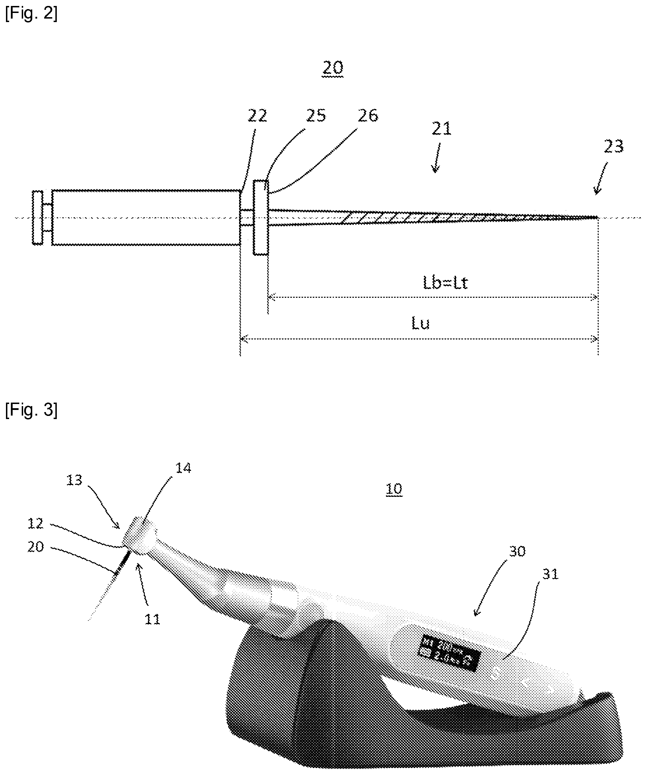

En référence à la figure 2, un instrument (20) est généralement muni d'une butée (25) réalisée en matériau élastomère. La position de cette butée est réglée par le praticien pour que la longueur de butée (Lb), définie par la distance entre la pointe (23) de l'instrument (20) et une sous-face (26) de la butée (25), soit égale à la longueur de travail (Lt). La longueur de butée (Lb) est donc inférieure ou égale à une longueur utile (Lu) de l'instrument (20).

De cette manière, lorsque le praticien réalise son traitement et creuse le canal (42) avec l'instrument (20), il sait que lorsque la sous-face (26) arrive au contact de la partie (41), alors la pointe (23) est au niveau de l'apex (43). Cependant, tant que la sous-face (26) n'est pas en contact de la partie (41), le praticien n'a aucune information précise sur la position de l'instrument (20) au sein du canal (42) si bien que l'instrument (20) peut aborder une courbure (44), ou une zone à risque, alors que le praticien ne s'y est pas préparé.

En référence aux figures 3 à 5, la pièce à main (10) selon l'invention comprend une unité de contrôle (30) pilotant un moteur destiné à entraîner un instrument (20) selon une dynamique adaptée, par l'intermédiaire d'un contre-angle (14).

La pièce à main (10) comprend un profondimètre (11) permettant de savoir en temps réel à quelle profondeur de travail (Lp) se trouve l'instrument au sein du canal (42). Le profondimètre (11) comprend des moyens de détection qui mesurent une distance (Le) entre la partie (41) de la dent (40) et le point de référence (12) qui est de préférence sur la pièce à main (10).

La soustraction de la distance (Le) à la longueur utile (Li) fournit la profondeur de travail (Lp) à laquelle se trouve l'instrument (20) à un instant donné.

En utilisant l'acquisition de la géométrie du canal (42) et la profondeur de travail (Lp) à un instant donné, il est possible de savoir si la pointe (23) s'apprête à aborder une zone à risque (44). D'une manière plus générale, il est également possible de reconstruire la géométrie que présente l'instrument (20) à cet instant donné, puisqu'il est conformé par la trajectoire du canal (42).

La pièce à main (10) comprend également des moyens de mesure (13) des contraintes mécaniques subies par l'instrument (20). Les moyens de mesure (13) sont de tout type adapté, et peuvent être des dynamomètres ou des extensomètres. De préférence, il s'agit de jauges de contraintes, par exemple axiales ou encore sous forme de rosettes. En effet, ces jauges de contraintes sont peu encombrantes, durables, et leur signal de sortie est facile à interpréter.

Afin que les mesures soient le moins erronées possibles, le profondimètre (11) et les moyens de mesure (13) sont de préférence disposés sur le contre-angle (14).

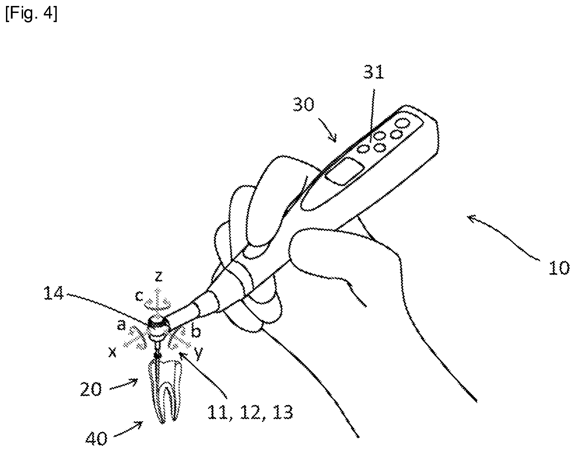

Afin de disposer d'un maximum d'informations quant aux conditions d'utilisation de l'instrument (20), les moyens de mesure (13) sont de préférence configurés pour mesurer les contraintes subies par l'instrument (20) selon trois axes d'un repère orthonormé. En référence à la figure 4, il s'agit de capter les efforts (x, y, z) ainsi que les couples (a, b, c). Il est ainsi possible d'obtenir complètement le torseur des efforts subis par l'instrument (20).

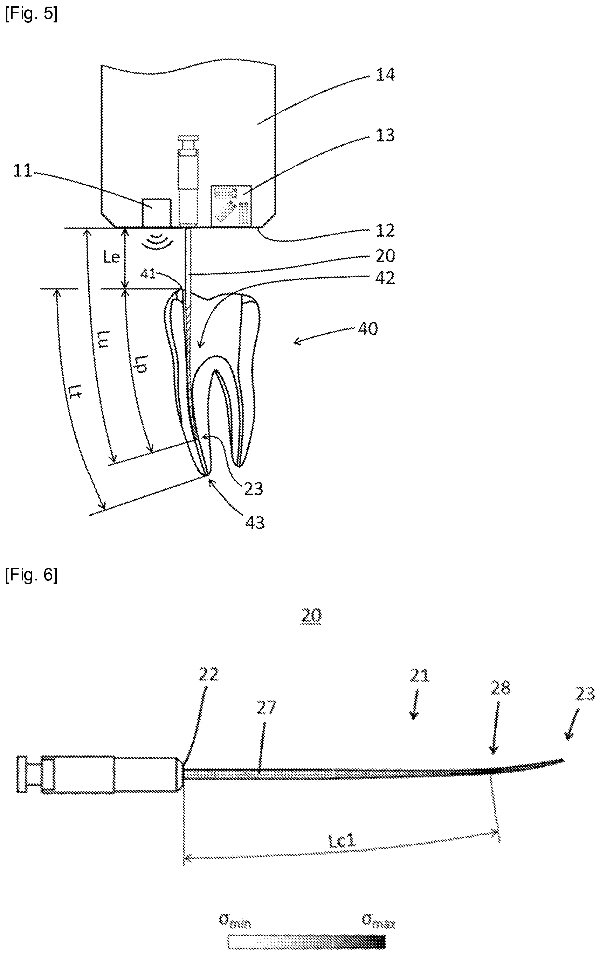

En référence à la figure 6, la connaissance de la configuration dans laquelle est conformée l'instrument (20) par le canal (42) à chaque instant, ainsi que les contraintes mécaniques qu'il subit, permet de réaliser a posteriori une analyse par méthode des éléments finis de la répartition effective des contraintes mécaniques au sein de l'instrument (20).

Cette analyse prend en compte la conception de l'instrument (20), c'est-à-dire le matériau qui le compose, sa géométrie nominale telle que ses dimensions et ses lèvres de coupes, ainsi que les éventuels traitements qu'a subi l'instrument (20) lors de sa fabrication, par exemple un traitement thermique.

La subdivision de l'instrument (20) en un maillage (27), la connaissance du torseur de contraintes auquel est soumis l'instrument (20), et le choix de conditions aux limites basées sur l'acquisition de la géométrie du canal (42) permettent de calculer comment sont réparties les contraintes au sein de l'instrument (20), et en particulier de connaître la ou le les zones de contraintes maximales (28) à l'instant donné choisi. Sur la figure 6, la zone de contraintes maximales (28) se situe à une première longueur (Lc1).

La profondeur de travail (Lp) ainsi que les contraintes évoluent au cours du traitement.

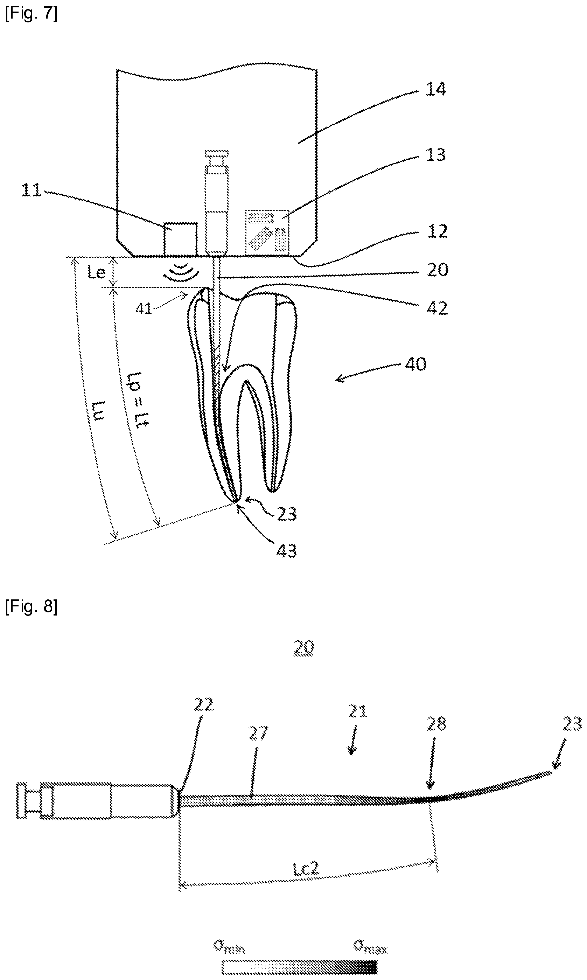

Sur la figure 7, la pointe (23) de l'instrument (20) atteint l'apex (43). Le canal (42) conforme l'instrument (20) selon une certaine configuration, et on voit sur la figure 8 que la zone de contraintes maximales (28) s'est déplacée à une seconde longueur (Lc2), inférieure à la première longueur (Lc1).

L'enregistrement en temps réel de la profondeur de travail (Lp) de l'instrument (20) ainsi que des contraintes qu'il subit permet de réaliser a posteriori une multitude d'analyse par éléments finis, permettant aux concepteurs de matériels endodontiques de concevoir au mieux le matériel ainsi que ses conditions d'utilisation.

Sur la base des calculs effectués :
- le fabricant de l'instrument (20) peut modifier la géométrie, le matériau ou les traitements de l'instrument (20) ;
- le fabricant de l'instrument (20) peut modifier les conditions d'utilisations prévues, telles que la vitesse de rotation de la dynamique instrumentale ;
- le fabricant de la pièce à main (10) peut intégrer des fonctions de sécurité supplémentaires dans le programme d'ordinateur exécuté par l'unité de contrôle (30).

Afin de mettre à disposition une base de données suffisantes pour les fabricants de matériel, le programme de l'unité de contrôle (30) est programmé pour enregistrer à intervalles réguliers, pour chaque traitement :
- la profondeur de travail (Lp) de l'instrument (20) ;
- les contraintes mécaniques subies par l'instrument (20).

Les intervalles peuvent être une distance, par exemple un pas de 0,5mm. La base de données contient donc un enregistrement des conditions d'utilisation de l'instrument (20) dans chaque configuration imposée par la géométrie du canal. La taille de la base de données est limitée.

Les intervalles peuvent être une durée, par exemple un pas de 0,5s. La base de données est plus volumineuse car le praticien fait des mouvements de va et vient lors du traitement : il y aura donc plusieurs enregistrements pour une profondeur de travail (Lp) donnée, mais les enregistrements sont beaucoup plus complets et permettent de mieux suivre l'évolution, à chaque instant, des conditions d'utilisation de l'instrument (20).

Les enregistrements comprennent également :
- la référence de l'instrument (20) utilisé, ce qui permet d'obtenir les caractéristiques nécessaires à l'analyse par éléments finis, par consultation d'une base de données supplémentaire comprenant les caractéristiques mécaniques des instruments (20) destinés à être utilisés en coopération avec la pièce à main (10) ;
- l'acquisition de la géométrie du canal (42), qui est de préférence une acquisition en trois dimensions pour que l'analyse par méthode par éléments finis soit la plus pertinente possible.

Les enregistrements peuvent être accompagnés de données supplémentaires acquises par l'unité de contrôle (30), par exemple les instants où l'irrigation du canal (42) était activée ou non, l'irrigation permettant d'évacuer les débris et de lubrifier la coupe de l'instrument (20). Il peut encore s'agir des paramètres de la dynamique instrumentale, tels que la vitesse de rotation, les angles de réciprocité, ou le couple exercé par le moteur.

Ces enregistrements peuvent également être accompagnés de données saisies par le praticien, de préférence au moyen de l'unité de contrôle (30) ou au moyen d'un ordinateur relié à la base de données de enregistrements. Le praticien peut par exemple déclarer si un bris instrumental est survenu, de manière que l'analyse a posteriori soit ciblée sur les traitements ayant mené à un bris.

Dans un but d'automatisation du process, le bris de l'instrument (20) est détecté automatiquement par le programme d'ordinateur, par exemple par l'identification d'une discontinuité de la mesure des contraintes : un relâchement soudain de la contrainte signifie que l'instrument (20) s'est brisé.

L'analyse de plusieurs enregistrements successifs, de manière incrémentale, permet de reconstituer comment s'est déroulé le traitement et permet d'identifier, ou à tout le moins de suspecter, les causes ayant mené au bris. Il peut s'agir d'un mésusage de l'instrument (20) si le praticien a utilisé une dynamique instrumentale non adaptée, ou encore une irrigation insuffisante.

La géométrie du canal (42) est bien entendu le critère majeur menant au bris instrumental. L'analyse a posteriori d'un grand nombre de traitements effectués permet d'identifier, pour des traitements ayant des paramètres communs, quelles sont les conditions ayant mené au bris ou au contraire ayant mené au succès du traitement.

Les paramètres communs sont bien entendu l'utilisation du même modèle d'instrument (20), ainsi qu'une géométrie semblable du canal radiculaire (42).

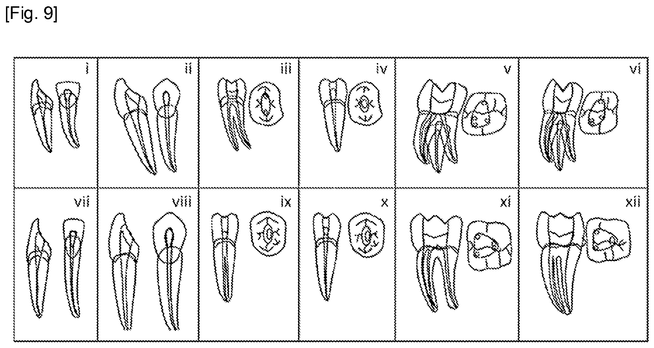

En référence à la figure 9, on illustre différents types de géométries (i-xii) de canaux (42). Chaque géométrie (i-xii) présente une difficulté de traitement plus ou moins complexe. Par exemple le profil (x) est rectiligne et ne présente pas de difficulté particulière. En revanche, le profil (ix), bien que globalement rectiligne, présente une bifurcation au niveau de laquelle le praticien devra veiller à ne pas orienter l'instrument (20) vers la mauvaise extension.

La base de données des enregistrements comprend de préférence les enregistrements issus du plus grand nombre de praticiens possible, afin de disposer d'une population suffisante de données de traitements différents, et en particulier de géométries différentes de canaux (42). L'analyse faite à partir des enregistrements est donc plus complète, et permet de limiter l'impact de certains biais d'utilisation.

Ces biais d'utilisation peuvent être par exemple un praticien qui a tendance à toujours préférer un premier modèle d'instrument (20) pour un type de traitement et une géométrie de canal (42) donnée, alors qu'un autre praticien préfère un autre modèle d'instrument (20). L'analyse des enregistrements permet de statuer sur le modèle d'instrument (20), la dynamique instrumentale, ou le geste le plus adapté.

La constitution de la base de données des enregistrements a deux utilités :
- un premier usage est de rendre possible de nouvelles actions d'amélioration continue menées par les fabricants de matériel ;
- un second usage est de pouvoir identifier, pour une dent (40) à traiter, quelles vont être les zones à risque, comment les aborder pour que le traitement soit un succès, et quelles sont au contraire les conditions menant très probablement à un bris instrumental.

Sur la base de l'acquisition de la géométrie d'un canal (42) à traiter, le programme d'ordinateur est programmé pour identifier au sein de la base de données quel est le profil (i-xii) qui s'en approche le plus, par conséquent quelles seront les zones à risques nécessitant une vigilance de la part du praticien, et éventuellement une adaptation du geste ou de la dynamique instrumentale.

Cette analyse a priori permet de guider le praticien au cours du traitement.

Lorsque le praticien effectue le traitement, le profondimètre (11) détecte à quelle profondeur de travail (Lp) se trouve l'instrument. S'il s'avère que la profondeur de travail (Lp) est proche de la profondeur d'une zone à risque, le praticien en est alerté afin qu'il prenne les précautions nécessaires.

L'unité de contrôle (30) actionne pour cela des moyens d'alerte de la pièce à main (10). Il peut s'agir d'une alerte sonore, d'une alerte haptique telle qu'une vibration, ou plus simplement d'une alerte visuelle affichée par l'interface (31).

Un code couleur peut être associé par exemple à trois niveaux de risques :
- une première couleur, par exemple vert, signifie que l'instrument (20) n'est pas dans une situation de risque de bris ;
- une seconde couleur, par exemple jaune, signifie que la probabilité d'occurrence de bris est moyenne, une vigilance du praticien pouvant être suffisante ;
- une troisième couleur, par exemple rouge, signifie que la probabilité d'occurrence est élevée et qu'une adaptation est impérative.

Avantageusement, le programme d'ordinateur prend également en compte le niveau des contraintes mécaniques mesurées par les moyens de mesure (13), de manière à affiner l'analyse et à guider le praticien plus précisément : par exemple, il est inutile d'alerter le praticien outre mesure s'il se trouve dans une zone à risque mais que les adaptations nécessaires sont mises en œuvre.

C'est-à-dire que si l'instrument (20) aborde une zone à risque (44) mais que le praticien a adapté la dynamique instrumentale :
- par exemple en réduisant la vitesse de rotation de l'instrument (20) ;
- ou encore si le praticien effectue des mouvements beaucoup plus souples de manière à n'exercer que des sollicitations mécaniques légères sur l'instrument (20) ; alors le programme d'ordinateur prend en compte ces adaptations en temps réel afin d'adapter le signal d'alerte, pour ne pas émettre de fausses alertes.

A l'inverse, si les moyens de mesure (13) détectent que les conditions d'utilisation de l'instrument (20) ne sont pas en adéquation avec le niveau de risque de la zone abordée par l'instrument (20), par exemple avec une dynamique instrumentale inadaptée ou des efforts appliqués à l'instrument (20) trop importants, alors le programme d'ordinateur est programmé pour émettre une alerte correspondant à une probabilité d'occurrence de bris élevée.

Enfin, le programme d'ordinateur peut être programmé pour adapter automatiquement la dynamique du moteur entraînant l'instrument (20) s'il détecte que la probabilité de bris est trop importante : la vitesse de rotation peut être diminuée, ou encore l'entrainement peut être stoppé.

En complément, le programme d'ordinateur est programmé pour pouvoir adapter, par intelligence artificielle, les enseignements issus de l'analyse des enregistrements préalables à une nouvelle géométrie de canal (42) ou à une nouvelle référence d'instrument (20).

Par exemple, une modification du matériau de l'instrument (20) peut être prise en compte et des analyses a posteriori peuvent être recalculées sur la base des nouveaux paramètres, pour obtenir une simulation de ce que produirait une telle modification. Il en est de même pour des modifications de la géométrie de l'instrument (20), et de manière plus générale pour tout paramètre influent.

Ou encore, si un canal (42) présente par exemple un coude ou une bifurcation à une profondeur différente de ce qui est connu au sein de la base de données, le programme d'ordinateur est programmé pour identifier tout de même cette zone critique pour que le guidage du praticien soit effectif et efficace lors du traitement.

Par ailleurs, le procédé et la pièce à main (10) peuvent être conformés différemment des exemples donnés sans sortir du cadre de l'invention, qui est défini par les revendications.

En particulier, l'unité de contrôle (30) couvre de manière générale tout équipement électronique utilisé pour la mise en œuvre des procédés et de la pièce à main (10) décrite. Il s'agit donc du micro-ordinateur intégré dans la pièce à main (10), mais également de tout ordinateur ou smartphone utilisé par le praticien et susceptible d'exécuter le programme d'ordinateur, de téléverser ou de télécharger des enregistrements de la base de données.

Le terme « programme d'ordinateur » est également à interpréter dans un sens large, et couvre les sous-programmes et les fonctionnalités complémentaires mis en œuvre dans les procédés décrits. De manière non limitative, il s'agit :
- du programme pilotant le moteur de la pièce à main (10) ;
- du programme d'acquisition des données mesurées par le profondimètre (11) et les moyens de mesure (13), ainsi que de leurs enregistrements ;
- du programme d'analyse a posteriori par méthode des éléments finis des conditions d'utilisation de l'instrument (20) dans les différentes configurations ;
- du programme d'analyse des enregistrements permettant d'établir les profils de dents (40) et de canaux (42) à traiter, y compris les zones critiques y correspondant ;
- du programme d'analyse a priori des zones critiques d'un canal à traiter (42).

Dans un mode de réalisation plus simple, c'est le praticien qui repère quelles sont les zones à risque, sans utiliser de base de données. Pour cela, le praticien utilise l'acquisition de la géométrie du canal (42) à traiter, et saisit les profondeurs des zones à risques sur la base de sa propre analyse. Lors du traitement, la pièce à main (10) est apte à alerter le praticien lorsqu'il aborde une zone à risque, sur la base des mesures effectuées par le profondimètre (11).

En outre, les caractéristiques techniques des différents modes de réalisation et variantes mentionnés ci-dessus peuvent être, en totalité ou pour certaines d'entre elles, combinées entre elles. Ainsi, le procédé et la pièce à main (10) peuvent être adaptés en termes de coût, de fonctionnalités et de performance.

## Revendications

1. Pièce à main (10) pour la pratique endodontique, comprenant une unité de contrôle (30) exécutant un programme d'ordinateur, et conçue pour entraîner un instrument canalaire (20), **caractérisée en ce que** la pièce à main (10) comprend un profondimètre (11) permettant de savoir en temps réel à quelle profondeur de travail (Lp) se trouve l'instrument (20) au sein du canal (42); et **en ce que** le programme d'ordinateur est configuré pour alerter le praticien lorsque l'instrument (20) se trouve dans, ou s'apprête à aborder, une zone à risque (44) préalablement identifiée au sein du canal, sur la base d'une complexité de la géométrie du canal.

2. Pièce à main (10) selon la revendication 1, **caractérisée en ce que** l'alerte est visuelle, sonore, ou haptique.

3. Pièce à main (10) selon l'une des revendications précédentes, **caractérisée en ce que** le programme d'ordinateur est configuré pour comparer la géométrie du canal radiculaire (42) à traiter avec une base de données comprenant des enregistrements de traitements antérieurs de canaux radiculaires, les enregistrements comprenant :
- les géométries des canaux traités ;
- les contraintes locales au sein d'un matériau constituant les instruments utilisés, obtenues par calcul par éléments finis basé sur la géométrie du canal, une géométrie de l'instrument, une profondeur de travail de l'instrument à un intervalle donné et une contrainte subie par l'instrument à ce même intervalle donné ; afin d'identifier des zones à risque du canal (42) à traiter, où des contraintes locales seront élevées au sein de l'instrument (20).

4. Pièce à main (10) selon l'une des revendications précédentes, **caractérisée en ce que** le programme d'ordinateur est configuré pour adapter la dynamique instrumentale lorsque l'instrument (20) atteint la zone à risque (44).

5. Pièce à main (10) selon l'une des revendications précédentes, **caractérisée en ce qu'**elle comprend des moyens de mesure (13) de contraintes mécaniques subies par l'instrument (20), connectés à l'unité de contrôle (30), et **en ce que** le programme d'ordinateur est configuré pour prendre en compte le niveau des contraintes mécaniques mesurées par les moyens de mesure (13), et :
- émettre une alerte si les conditions d'utilisation de l'instrument (20) ne sont pas en adéquation avec le niveau de risque de la zone à risque (44) abordée par l'instrument (20),
- ne pas émettre d'alerte si les adaptations nécessaires sont mises en œuvre.

6. Pièce à main (10) selon l'une des revendications précédentes, **caractérisée en ce que** le profondimètre (11) comprend des moyens de détection (11) de la distance (Le) entre un point de référence (12) et une partie (41) d'une dent (40), et **en ce que** le programme d'ordinateur est programmé pour déterminer une profondeur (Lp) à laquelle se trouve l'instrument (20) en cours de travail en fonction d'une longueur connue (Lu) de l'instrument (20).

## Patentansprüche

1. Handstück (10) für die endodontische Praxis, umfassend eine Steuereinheit (30), die ein Computerprogramm ausführt und ausgelegt ist, um ein Kanalinstrument (20) anzutreiben, **dadurch gekennzeichnet, dass** das Handstück (10) ein Tiefenmessgerät (11) umfasst, das es ermöglicht, in Echtzeit zu ermitteln, in welcher Arbeitstiefe (Lp) sich das Instrument (20) innerhalb des Kanals (42) befindet;
und dass das Computerprogramm so eingerichtet ist, dass es den Arzt warnt, wenn sich das Instrument (20) in einem zuvor identifizierten Risikobereich (44) innerhalb des Kanals befindet oder sich diesem nähert, auf der Grundlage einer Komplexität der Kanalgeometrie.

2. Handstück (10) nach Anspruch 1, **dadurch gekennzeichnet, dass** die Warnung optisch, akustisch oder haptisch ist.

3. Handstück (10) nach einem der vorhergehenden Ansprüche, **dadurch gekennzeichnet, dass** das Computerprogramm so eingerichtet ist, dass es die Geometrie des zu behandelnden Wurzelkanals (42) mit einer Datenbank vergleicht, die Aufzeichnungen früherer Wurzelkanalbehandlungen umfasst, wobei die Aufzeichnungen Folgendes umfassen:
- die Geometrien der behandelten Kanäle;
- die lokalen Beanspruchungen innerhalb eines Materials, aus dem die verwendeten Instrumente hergestellt sind, die durch Finite-Elemente-Berechnung auf der Grundlage der Kanalgeometrie, einer Instrumentengeometrie, einer Arbeitstiefe des Instruments in einem bestimmten Intervall und einer Beanspruchung, der das Instrument in demselben Intervall ausgesetzt ist, erhalten werden, um Risikobereiche des zu behandelnden Kanals (42) zu identifizieren, in denen lokale Beanspruchungen innerhalb des Instruments (20) hoch sein werden.

4. Handstück (10) nach einem der vorhergehenden Ansprüche, **dadurch gekennzeichnet, dass** das Computerprogramm so eingerichtet ist, dass es die Instrumentendynamik anpasst, wenn das Instrument (20) den Risikobereich (44) erreicht.

5. Handstück (10) nach einem der vorhergehenden Ansprüche, **dadurch gekennzeichnet, dass** es Mittel (13) zur Messung der mechanischen Beanspruchungen umfasst, denen das Instrument (20) ausgesetzt ist, die mit der Steuereinheit (30) verbunden sind, und dass das Computerprogramm so eingerichtet ist, dass es die Höhe der von den Messmitteln (13) gemessenen mechanischen Beanspruchungen berücksichtigt, und:
- eine Warnung ausgibt, wenn die Nutzungsbedingungen des Instruments (20) nicht mit dem Risikoniveau des Risikobereichs (44), den das Instrument (20) berührt, übereinstimmen,
- keine Warnung ausgibt, wenn die notwendigen Anpassungen umgesetzt werden.

6. Handstück (10) nach einem der vorhergehenden Ansprüche, **dadurch gekennzeichnet, dass** das Tiefenmessgerät (11) Mittel zum Erkennen (11) des Abstands (Le) zwischen einem Referenzpunkt (12) und einem Teil (41) eines Zahns (40) umfasst, und dass das Computerprogramm so programmiert ist, dass es eine Tiefe (Lp), in der sich das Instrument (20) während der Arbeit befindet, in Abhängigkeit von einer bekannten Länge (Lu) des Instruments (20) bestimmt.

## Claims

1. Handpiece (10) for endodontic practice, comprising a control unit (30) executing a computer program, and designed to drive a root canal instrument (20), **characterised in that** the handpiece (10) comprises a depth gauge (11) enabling real-time determination of the working depth (Lp) of the instrument (20) within the canal (42); and **in that** the computer program is configured to alert the practitioner when the instrument (20) is in, or about to enter, a previously identified risk area (44) within the canal, based on a complexity of the geometry of the canal.

2. Handpiece (10) according to Claim 1, **characterised in that** the alert is visual, audible, or haptic.

3. Handpiece (10) according to one of the preceding claims, **characterised in that** the computer program is configured to compare the geometry of the root canal (42) to be treated with a database comprising records of previous root canal treatments, the records comprising:
- the geometries of the canals treated;
- the local stresses within a material constituting the instruments used, obtained by finite element calculation based on the geometry of the canal, a geometry of the instrument, a working depth of the instrument at a given interval and a stress exerted on the instrument at that same given interval; in order to identify risk areas of the canal (42) to be treated, where local stresses will be high within the instrument (20).

4. Handpiece (10) according to one of the preceding claims, **characterised in that** the computer program is configured to adapt the instrument dynamics when the instrument (20) reaches the risk area (44).

5. Handpiece (10) according to one of the preceding claims, **characterised in that** it comprises means (13) for measuring mechanical stresses exerted on the instrument (20), connected to the control unit (30), and **in that** the computer program is configured to take into account the level of mechanical stresses measured by the measuring means (13), and:
- issue an alert if the conditions of use of the instrument (20) are not in line with the risk level of the risk area (44) which the instrument (20) is about to enter,
- not issue an alert if the necessary adaptations are implemented.

6. Handpiece (10) according to one of the preceding claims, **characterised in that** the depth gauge (11) comprises means for detecting (11) the distance (Le) between a reference point (12) and a part (41) of a tooth (40), and **in that** the computer program is programmed to determine a depth (Lp) at which the instrument (20) is located during operation as a function of a known length (Lu) of the instrument (20).
